# EUROPÄISCHE PATENTANMELDUNG

(11) **EP 1 857 723 A2**
(43) Veröffentlichungstag der Anmeldung: **21.11.2007**
(21) Anmeldenummer: 07105128.8
(22) Anmeldetag: 28.03.2007
(51) Int. Cl.: F16L 13/14

(54) **Verbindungseinrichtung für Verbundrohre und Kunststoffrohre sowie entsprechende Anordnung**

(30) Priorität: 19.05.2006 DE 202006008069 U
(71) Anmelder: IPA Produktions- & Vertriebsges.m.b.H., 1230 Wien (AT)
(72) Erfinder: Glinzerer, Gerhard, Dr., 2371 Hinterbrühl (AT)
(74) Vertreter: Schwabe - Sandmair - Marx

(57) **Zusammenfassung**

Die Erfindung betrifft eine Verbindungseinrichtung für Verbund- sowie Kunststoffrohre mit einer Metallschicht und wenigstens einer Kunststoffschicht, einem Anschlussabschnitt (10), einer Stützhülse (12), die an den Anschlussabschnitt (10) entgegen Rohraufschubrichtung (30) anschließt sowie einem Klemmring (16) mit einer in Umfangsrichtung plastisch verformbaren radialen Erstreckung, deren plastische Verformung seinen Umfang reduziert.

## Beschreibung

Die Erfindung betrifft eine Verbindungseinrichtung für Verbundrohre nach dem Anspruch 1 und ferner eine Anordnung mit einem Verbundrohr nach dem Anspruch 9.

Für Heizungs- und Sanitäreinrichtungen in Bauwerken gibt es eine große Anzahl von verschiedenen Verbindungseinrichtungen, die mehr oder weniger komplex ausgebildet sind. Gängige Verbindungseinrichtungen sind mit einer plastisch verformbaren Presshülse ausgebildet, um Kunststoffrohre und insbesondere Verbundrohre mit wenigstens einer Metallschicht und wenigstens einer Kunststoffschicht, die in der Regel innen liegt, an einer Verbindungseinrichtung festzulegen. Dabei wird über eine Stützhülse einer Verbindungseinrichtung eine zylindrische Presshülse geschoben, wobei in den Ringraum zwischen der Stütz- und der Presshülse ein Rohr eingeschoben werden kann. Durch dauerhafte, plastische Verpressung und damit partielle Durchmesserreduktion der Presshülse kann dann das Rohr in der Verbindung festgelegt werden.

Eine solche Verbindungseinrichtung bzw. Anordnung mit einem Rohr gemäß dem Stand der Technik ist relativ komplex und teuer. Ferner ist eine spezielle Presszange erforderlich, deren Gewicht zwischen 10 und 15 kg liegt. Ein Verpressen mit einer derartigen Presszange ist relativ aufwändig und nicht an sämtlichen Stellen in einem Bauwerk ohne weiteres möglich.

Es ist deshalb eine Aufgabe gemäß der vorliegenden Erfindung, eine Verbindungseinrichtung und eine entsprechende Anordnung mit dieser zu konzipieren, die kostengünstiger ist und bevorzugt mit einem einfachen Werkzeug, insbesondere einer einfachen Zange oder dgl., mit einem Kunststoffrohr oder Verbundrohr verbunden werden kann.

Die gemäß der Erfindung erzielbaren Vorteile beruhen auf einer Verbindungseinrichtung für Verbundrohre mit einer Metallschicht und wenigstens einer Kunststoffschicht, wobei die Verbindungseinrichtung mit einem Anschlussabschnitt versehen ist, um die Verbindungseinrichtung festzulegen oder anzuschließen. Ferner ist eine Stützhülse vorgesehen, die den Anschlussabschnitt fortsetzt und auf die das Kunststoffrohr bzw. Verbundrohr aufgeschoben werden kann. Zur Festlegung des Kunststoffrohres bzw. Verbundrohres auf der Stützhülse ist ein Klemmring mit einer in Umfangsrichtung plastisch verformbaren radialen Erstreckung vorgesehen, deren plastische Verformung den Umfang des Klemmringes reduziert, um durch die Reduktion des Umfanges des Klemmrings ein Rohrende des Verbundrohres bzw. Rohres auf der Stützhülse festzulegen und ggf. gegen eine eventuell vorhandene Dichteinrichtung zu pressen.

Gemäß einer bevorzugten Ausführungsform ist wenigstens eine Dichteinrichtung, und sind bevorzugt mehrere, insbesondere zwei, Dichteinrichtungen auf der Stützhülse vorgesehen, wovon insbesondere wenigstens eine durch den Festlegungsvorgang für die Verbindungseinrichtung bzw. das Verbundrohr mit einem Anpressdruck aufgrund der Durchmesserreduktion des Klemmringes beaufschlagt wird.

Gemäß einer weiteren bevorzugten Ausführungsform kann ein Positionierungsring vorgesehen sein, der auf der Stützhülse sitzt, und der das Verbundrohr auf der Stützhülse positioniert. Ferner kann der Positionierungsring so positioniert sein, dass der Klemmring gegen den Positionierungsring stirnseitig anliegt, um so eine definierte Position für den Klemmring auf dem Rohrende bereitzustellen. Bei dieser vordefinierten Position des Klemmrings kann bevorzugt ein Verpressen bzw. eine Druckbeaufschlagung für wenigstens eine der vorgesehenen Dichteeinrichtungen bereitgestellt werden.

Besonders vorteilhaft ist es, wenn ein äußerer Ring vorgesehen ist, der auf dem auf der Stützhülse aufschiebbaren Verbundrohr aufsitzt, wobei dieser äußere Ring mit einem in Umfangsrichtung vorgesehenen Überlappungsbereich ausgebildet ist. Der Klemmring kann auf dem äußeren Ring aufliegen und diesen radial komprimieren, um eine schonende Verpressung des darunter liegenden Verbundrohres sowie der darunter liegenden Dichtung erzielen zu können. Dabei kann der äußere Ring auch noch mit wenigstens einer umfänglichen Führung ausgebildet sein, die dazu vorgesehen ist, den Klemmring in seiner vorbestimmten Position auf dem äußeren Ring zu halten und während des Verpressvorgangs zu führen.

Bevorzugt ist der Positionierungsring ein Kunststoffring, der sich entgegen der Aufschubrichtung des Verbundrohres erstreckt, um das Ende des Verbundrohres oder Kunststoffrohres zu umgeben.

Der Positionierungsring kann auch mit einem bevorzugt wandstärken- oder außendurchmesserreduzierten Abschnitt ausgebildet sein, auf den der Klemmring oder der äußere Ring aufgesteckt sein können und damit vormontierbar sind. Auf diese Weise kann der Klemmring bzw. kann die Anordnung aus Klemmring und äußerem Ring vormontiert an der erfindungsgemäßen Verbindungseinrichtung gehalten werden. Das festzulegende Rohr kann hier ganz einfach eingeschoben werden und weitere Maßnahmen sind nicht erforderlich.

Die Stützhülse weist gemäß einer Ausführungsform wenigstens eine teilumfängliche Struktur auf, in die der Positionierungsring einrastbar oder auf die er aufschnappbar ist. Hierdurch kann der Positionierungsring in einer vorbestimmten Position gehalten werden, um bei der Montage Montagefehler zu reduzieren.

Bevorzugt weist die Stützhülse der Verbindungseinrichtung nach der Erfindung nahe ihrer Stirnseite einen Anschlagabschnitt auf, gegen den eine innere Kunststoffschicht des Verbundrohres zur Beendigung des Aufschiebevorgangs anschlagen kann. Hierdurch kann ein galvanischer Kontakt zwischen der aus einem Metall bestehenden Verbindungseinrichtung, insbesondere der Stützhülse und der Metallschicht des Verbundrohres vermieden werden, wodurch eine galvanische Trennung auf einfache Weise bewerkstelligt werden kann.

Eine Anordnung mit einem Verbundrohr mit mindestens einer Metallschicht und mindestens einer Kunststoffschicht sowie mit einer Verbindungseinrichtung nach der voranstehend erörterten Erfindung kann sämtliche der oben bezeichneten Vorteile ebenfalls bereitstellen bzw. kann die genannten Merkmale umfassen.

Wie oben ausgeführt, ist die Erfindung sowohl in Verbindung mit Kunststoff- wie auch Verbundrohren einsetzbar.

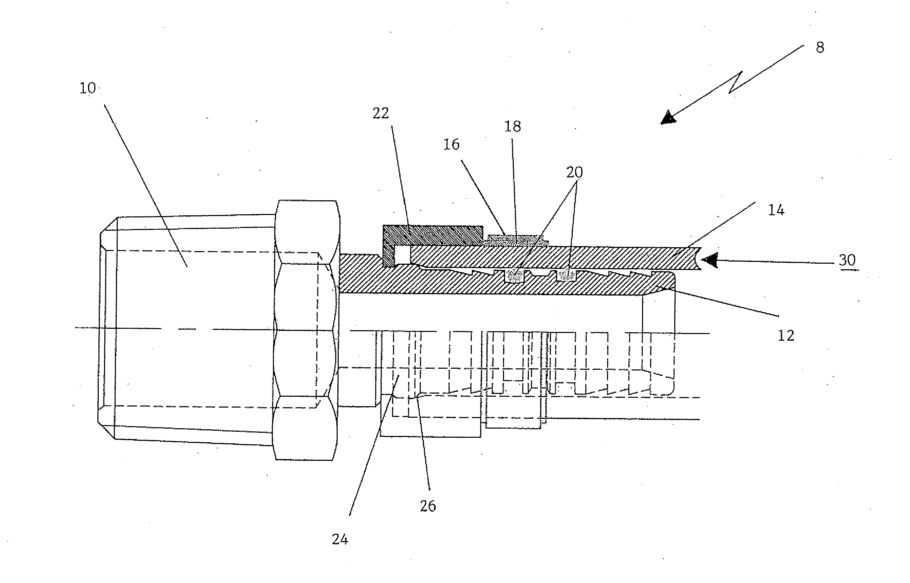

Nachfolgend wird die vorliegende Erfindung anhand einer bevorzugten Ausführungsform unter Bezugnahme auf die beigefügte, einzige Figur näher erläutert. Dabei werden weitere Merkmale, Vorzüge und Zielsetzungen gemäß der Erfindung offenbart.

In der Figur wird eine Anordnung 8 gemäß der Erfindung dargestellt, die einen Anschlussabschnitt 10, eine daran anschließende Stützhülse 12 und einen Klemmring 16 umfasst.

Ein Kunststoffrohr bzw. Verbundrohr 14 wird in Aufschubrichtung 30 (dargestellt durch den Richtungspfeil) auf die Stützhülse 12 aufgeschoben, wobei der beispielsweise auf dem Rohrende des Rohrs 14 vorpositionierte Klemmring 16 bevorzugt über einer Dichteinrichtung 20, beispielsweise einem O-Ring aus einem Gummimaterial oder dgl., zu liegen kommt.

Der vorgenannte Teil der Figurenbeschreibung bezieht sich auf die Grundmerkmale der erfindungsgemäßen Verbindungseinrichtung bzw. der erfindungsgemäßen Anordnung.

Die dargestellte Ausführungsform umfasst eine Stützhülse 12, die in jeweiligen umfänglichen Nuten mit zwei Dichteinrichtungen bzw. O-Ringen 20 ausgebildet ist.

Ein Positionierungsring 22 bevorzugt aus Kunststoff ist auf die Stützhülse 12 aufgeschnappt, wobei das radial verjüngte Ende des Positionierungsringes 22 in eine entsprechende Kerbe oder Nut 24 der Stützhülse eingeschnappt ist. Die Stützhülse weist einen Anschlag 26 auf, gegen den ein stirnseitiges Ende des Verbundrohres 30 anstößt, wobei die innere Kunststoffschicht des Verbundrohres 14 gegen den Anschlag 26 anläuft, um einen galvanischen Kontakt zwischen einer (nicht dargestellten) Metallschicht des Verbundrohres und der Verbindungseinrichtung unterbinden zu können.

Der Klemmring 16 sitzt über einen äußeren Ring auf der Oberfläche des Verbundrohres 14. Der Klemmring 16 weist eine in Umfangsrichtung plastisch verformbare, radiale Erstreckung auf, deren plastische Verformung seinen Umfang reduziert. Wird diese Erstreckung zusammengepresst, und der Umfang des Klemmringes reduziert, wird gleichzeitig der äußere Ring komprimiert, wobei in Umfangsrichtung übereinander liegende, in Umfangsrichtung bewegliche Enden des äußeren Ringes in Umfangsrichtung entgegengesetzt bewegt werden können, um den Umfang des äußeren Ringes einhergehend mit der Umfangsreduzierung des Klemmringes in seinem Umfang zu reduzieren, um das Rohrende auf der Stützhülse 12 festzulegen.

Entgegen der Aufschubrichtung 30 kann der bevorzugt aus Kunststoff gefertigte Positionierungsring 22 eine zylindrische Erstreckung aufweisen, auf der der Klemmring 16 und, insofern vorhanden, der äußere Ring 18 vorpositianiert werden kann, um eine separate Positionierung und die Lagerung und den Transport des Klemmringes 16 und des äußeren Ringes 18 als separate Teile vermeiden zu können.

Die Stützhülse 12 kann in üblicher Weise mit umfänglichen Zähnen, Zacken und dgl. ausgebildet sein, um das aufgeschobene bzw. festgelegte Verbundrohr fest auf der Verbindungseinrichtung gemäß der Erfindung zu halten und damit die Anordnung gemäß der Erfindung zusätzlich abzusichern.

Ein oberer Teil der Figur zeigt eine Schnittdarstellung, während der andere Teil der Figur die Konturen in einer Seitenansicht zu erkennen gibt.

In der Regel wird eine Verbindungseinrichtung gemäß der Erfindung eine generell zylindrische Form aufweisen, so dass sämtliche Bestandteile ebenfalls im Wesentlichen mit einer Zylindersymmetrie ausgebildet sind. Im vorliegenden Fall weicht im Wesentlichen nur die plastisch verformbare, radiale Erstreckung (nicht dargestellt) des Klemmringes von der Zylindersymmetrie der verbleibenden Teile der erfindungsgemäßen Verbindungseinrichtung ab. Die gemäß der Erfindung vorgeschlagene Verbindungseinrichtung hat, wie voranstehend angedeutet, den Vorteil, dass eine Montage ohne eine spezielle Presszange sowie ohne spezielle Pressbacken möglich ist.

Bekannte Systeme erfordern eine Vielzahl von verschiedenen Pressbacken für jede Presszange, da zu nahezu jedem anderen Durchmesser einer Verbindungseinrichtung zum Anschließen eines Rohres mit entsprechend großem Durchmesser bekannter Art eine spezielle Pressbackenkontur erforderlich ist. Ferner ermöglicht die Erfindung eine Verarbeitung, die ohne Zerstörung der vollendeten Verbindungseinrichtung nicht lösbar ist. Die Verpressung der erfindungsgemäßen Verbindungseinrichtung ist anhand der Verformung der plastisch verformbaren, radialen Erstreckung eindeutig identifizierbar. Auch durch die Isolierringausformung kann eine Verbindungseinrichtung gemäß der Erfindung erkennbar gemacht werden, die noch nicht verpresst worden ist. Toleranzen der Bestandteile der Verbindungseinrichtung können leicht bewältigt werden, da etwaige Ringspalte zwischen der Stützhülse und dem aufgeschobenen Verbundrohr bzw. dem Verbundrohr und dem Klemmring 16 durch eine großzügige Dimensionierung des Klemmringes 16 und ggf. des äußeren Ringes 18 tolerierte werden können. Letztlich kann durch eine im Durchmesser verringerte Stützhülse sogar eine Leckagefunktion bereitgestellt werden, die zusätzlich unverpresste Verbindungen oder unzureichend verpresste Verbindungen gemäß der Erfindung erkennbar machen kann.

## Patentansprüche

1. Verbindungseinrichtung für Verbund- sowie Kunststoffrohre mit einer Metallschicht und wenigstens einer Kunststoffschicht,
- mit einem Anschlussabschnitt (10),
- mit einer Stützhülse (12), die an den Anschlussabschnitt (10) entgegen Rohraufschubrichtung (30) anschließt; und
- mit einem Klemmring (16) mit einer in Umfangsrichtung plastisch verformbaren radialen Erstreckung, deren plastische Verformung seinen Umfang reduziert.

2. Verbindungseinrichtung nach Anspruch 1, **dadurch gekennzeichnet, dass** wenigstens eine, bevorzugt zwei oder mehr Dichteinrichtungen auf der Stützhülse vorgesehen sind.

3. Verbindungseinrichtung nach einem der Ansprüche 1 oder 2, **dadurch gekennzeichnet, dass** ein Positionierungsring (22), der auf der Stützhülse sitzt, und der das Verbundrohr (14) auf der Stützhülse positioniert oder den Klemmring auf dem Rohr positioniert.

4. Verbindungseinrichtung nach einem der Ansprüche 1 bis 2, **dadurch gekennzeichnet, dass** ein äußerer Ring (18) vorgesehen ist, der auf dem auf die Stützhülse aufschiebbaren Verbundrohr aufsitzt, und der mit einem in Umfangsrichtung vorgesehenen Überlappungsbereich ausgebildet ist, wobei der Klemmring (16) auf dem äußeren Ring aufliegt, um diesen im Falle der Verformung des Klemmringes radial zu komprimieren.

5. Verbindungseinrichtung nach einem der Ansprüche 3 oder 4, **dadurch gekennzeichnet, dass** der Positionierungsring ein Kunststoffring ist, der sich entgegen der Aufschubrichtung des Verbundrohres erstreckt, um das Ende des Verbundrohres zu umgeben.

6. Verbindungseinrichtung nach einem der Ansprüche 3 bis 5, **dadurch gekennzeichnet, dass** der Positionierungsring einen bevorzugt wandstärken- oder durchmesserreduzierten Abschnitt aufweist, auf dem der Klemmring oder der äußere Ring und der Klemmring vormontierbar sind.

7. Verbindungseinrichtung nach einem der Ansprüche 3 bis 6, **dadurch gekennzeichnet, dass** die Stützhülse (12) eine wenigstens teilumfängliche Struktur (24) aufweist, in die der Positionierungsring einrastbar oder auf die er aufschnappbar ist.

8. Verbindungseinrichtung nach einem der Ansprüche 1 bis 7, **dadurch gekennzeichnet, dass** die Stützhülse nahe ihrer Stirnseite einen Anschlagabschnitt (26) aufweist, gegen den eine innere Kunststoffschicht des Verbundrohres zur Beendigung des Aufschubvorganges zur Anlage bringbar ist.

9. Anordnung mit einem Verbundrohr mit mindestens einer Metallschicht und mindestens einer Kunststoffschicht sowie mit einer Verbindungseinrichtung nach einem der Ansprüche 1 bis 8.
